# EUROPEAN PATENT SPECIFICATION

(11) **EP 1 002 466 B1**
(45) Date of publication and mention of the grant of the patent: **11.02.2004**
(21) Application number: 99309040.6
(22) Date of filing: 15.11.1999
(51) Int. Cl.: A23G 3/00, A21D 13/08

(54) **A sugar-free icing composition**
Zuckerfreie Beschichtungszusammensetzung
Composition de revêtement sans sucre

(30) Priority: 17.11.1998 US 108818 P
(43) Date of publication of application: 24.05.2000
(73) Proprietor: CERESTAR HOLDING B.V., 4551 LA Sas Van Gent (NL)
(72) Inventor: Peterson, Dorothy, St. John, Indiana (US); Hakmiller, Eric, Naperville, Illinois (US)
(74) Representative: McQueen, Andrew Peter

(56) References cited:
- EP-A- 0 676 147
- EP-A- 0 688 502
- EP-A- 0 800 823
- WO-A-95/07625
- US-A- 5 304 389
- US-A- 5 436 329
- US-A- 5 571 547
- PATENT ABSTRACTS OF JAPAN vol. 013, no. 451 (C-643), 11 October 1989 (1989-10-11) -& JP 01 174332 A (MITSUBISHI KASEI CORP;OTHERS: 01), 10 July 1989 (1989-07-10)
- PATENT ABSTRACTS OF JAPAN vol. 013, no. 549 (C-662), 7 December 1989 (1989-12-07) -& JP 01 225458 A (MITSUBISHI KASEI CORP;OTHERS: 01), 8 September 1989 (1989-09-08)

## Description

### BACKGROUND OF THE INVENTION

### 1. Field of the Invention

This invention relates to cream icings used for baked goods and, more particularly, to a sugar-free cream icing having reduced calorie content which is suitable for use by diabetics.

### 2. Prior Art

Cream icings are used to cover baked goods such as cakes, cup cakes and cookies. They add sweetness and decoration to the baked goods.

Conventionally, cream icings are made from a mixture of sugar, shortening and water, where the sugar makes up a substantial portion of the icing composition. Typically, sucrose is the sugar component in cream icings. The sugar performs a number of functions in the icing composition. Besides adding sweetness, it also acts as a bulking agent and provides strength to the icing composition.

In the manufacture of sugar-free icings, the sugar is removed from the formulation and replaced with a bulking agent that attempts to mimic the functionality of the sugar in the icing. Typically, the sugar is replaced with a sugar alcohol, hydrogenated starch, hydrolysates, isomalt, lactitol, maltitol, mannitol, sorbitol, xylitol and polydextrose. These sugar replacements have shortcomings. Some of these shortcomings include limited caloric reduction, gastrointestinal side effects which limit their use, lack of storage stability, and insufficient texture and bulking properties.

US Patent No. 5,304,389 discloses icing compositions comprising sugar (e.g. erythritol), fat and an emulsifier as the main components. The icing compositions do not include water as an ingredient and have a moisture content of 1% or less.

European Patent Application EP 668502 discloses an edible composition (e.g. a composition used as a cream filling) containing erythritol and/or xylitol and fat in an amount of 95% w/w of the composition. The composition does not contain water.

US Patent No. 5,436,329 discloses compositions containing hypocariogenic hydrogenated saccharides which can be used as a sweetening composition or as a texturing agent. Said compositions comprise a mixture of hydrogenated monosaccharides (e.g. erythritol), hydrogenated disaccharides and polysaccharides. The preparation of hypocariogenic chewy pastes and boiled sweets comprising the composition of the invention is described, however there is no disclosure of cream icing.

Japanese Patent Publication No. JP 01174332 describes a non-hygroscopic icing agent consisting mainly of mesoerythritol incorporated with a small amount of high intensity sweetener. The icing agent does not contain a shortening.

Japanese Patent Publication No. JP 01225458 describes a sweetener composition having good flowability which comprises erythritol and at least one other sugar or sugar alcohol, and water. The icing agent does not contain a shortening.

There is a need to find a replacement for the sugar component in cream icings which provides a sugar-free icing, allows for a reduction in the caloric content of the icing, while still mimicking the functionality of the sugar without the gastrointestinal side effects of known sugar substitutes.

### SUMMARY OF THE INVENTION

A sugar-free cream icing composition with reduced caloric content has now been discovered wherein erythritol is employed along with a bulking agent, an emulsifier and a high intensity sweetener to replace the sugar component in the icing composition.

The use of erythritol in the icing composition provides distinct functional and nutritional benefits compared to other sugar substitutes. Erythritol can replace over 50% of the weight and volume of the sucrose, has a very low calorie, content (compared to other known sugar substitutes), is well tolerated without gastrointestinal side effects, and does not affect blood glucose or insulin levels.

It has been found that, when erythritol is combined with bulking agents, emulsifiers, and high intensity sweeteners, the texture and shelf life properties of the icing are comparable to a conventional sucrose based cream icing.

Due to its small molecular size, erythritol behaves completely different from other polyols that are used as sugar substitutes, in that it is absorbed quickly, is not subject to metabolic conversion in the body, and has a high digestive tolerance- In addition, the low solubility and excellent crystalline structure allow erythritol, in combination with a bulking agent, emulsifier and high intensity sweetener, to mimic the functional properties of sucrose in conventional cream icings. Thus, the cream icings of the present invention are comparable to conventional sugar-based cream icings.

The cream icing composition of the present invention has good water activity control and good shelf life.

Because erythritol acts as a sweetener, but is not broken down by the digestive tract, it reduces the caloric content of the icing composition while still providing sweetness to the icing.

Broadly, a sugar-free composition for use as a replacement for sugar in a conventional cream icing in accordance with the present invention comprises: erythritol; a bulking agent; an emulsifier; and a high intensity sweetener.

A sugar-free cream icing composition made in accordance with the present invention comprises: the sugar-free composition of the present invention; shortening; and water.

The present invention can also be viewed as an improvement over conventional sugar-free icings which comprises: a sugar substitute; shortening; and water wherein the improvement is replacing at least a portion of the sugar substitute with an effective amount of the sugar-free composition of the present invention. The amount of sugar-free composition is effective to reduce the caloric content of the icing or reduce gastrointestinal side effects of the conventional sugar substitute.

### DETAILED DESCRIPTION OF THE INVENTION

The sugar-free composition of the present invention preferably comprises about 50% to about 100% of erythritol; about 0% to about 50% of a bulking agent; about 0% to about 1% of a high intensity sweetener; and about 0% to about 1% of an emulsifier. These are weight percents based on total weight of the sugar-free composition. More preferably, the sugar-free composition of the present invention comprises: about 65% erythritol; about 35% of a bulking agent; about 0.3% of an emulsifier; and about 0.3% of a high intensity sweetener.

The sugar-free cream icing of the present invention suitably comprises about 50% to about 75% of the sugar-free composition of the present invention; about 10% to about 50% of a shortening; and about 5% to about 20% water. These are weight percents based on the total weight of the icing composition. More preferably, the icing composition of the present invention comprises about 65% of the sugar-free composition of the present invention; about 20% shortening; and about 10% water with a remainder of other ingredients, such as flavorings, colorings and preservatives.

The sugar-free composition of the present invention is used to replace at least about 50% of the conventional sugar substitutes in a sugar-free cream icing and, more preferably, about 100% of the sugar substitute in a conventional sugar-free icing. These percentages are based on weight percents. The replacement is conducted in a 1:1 weight basis, e.g. replace 2 grams of a conventional sugar substitute with 2 grams of the sugar-free composition of the present invention.

Any source of erythritol can be employed in the present invention. Suitable sources include erythritol obtained from starch. One such commercially available source of erythritol is C 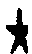 Eridex™ from Cerestar USA, Inc. of Hammond, Indiana, USA.

Suitable bulking agents for use in the present invention include polyols, starch, starch hydrolysates, hydrogenated starch hydrolysates, and polydextrose. Suitable polyols include sugar alcohols having the general formula CH₂OH-(CHOH)ₙ - CH₂OH wherein n may be from 2. to 5. Conventional polyols used in foods such as isomalt, lactitol, maltitol, mannitol, sorbitol and xylitol are suitable for use in the present invention as bulking agents. Suitable starches include starch obtained from corn, potato, wheat and rice. Suitable starch hydrolysates are maltodextrins and especially low DE maltodextrins. The maltodextrin can be from any source of starch to corn, wheat, potato, and rice.

Suitable high intensity sweeteners include saccharine, aspartame and acesulfame-k.

Suitable emulsifying agents include any conventional emulsifier suitable for food use such as lecithin and polysorbate.

The shortening employed in the present invention is any conventional shortening used in cream icings. No special water need be employed, just potable water.

Conventional flavorings and colorings can be included in the cream icing composition of the present invention. Suitable colorings include food dyes to color the icing. Suitable flavorings include chocolate, butterscotch, peanut butter, vanilla, strawberry, and coffee.

Since the cream icing composition of the present invention is intended for packaging and sale in grocery stores, it is conventional to include a preservative in the composition.

The sugar-free composition of the present invention can be premixed and sold as a mix or the user can obtain the individual components and mix them together when preparing the sugar-free cream icing.

The cream icing of the present invention is made in a conventional manner using conventional equipment by mixing together the components of the sugar-free composition of the present invention.

Replacement of a conventional sugar substitute in a cream icing with the sugar-free composition of the present invention is done in a conventional manner in accordance with the present invention.

These and other aspects of the present invention may be more fully understood by reference to one or more of the following examples.

### EXAMPLE 1

This example illustrates making a sugar-free cream icing with the sugar-free composition of the present invention and compares the sugar-free cream icing of the present invention with a conventional cream icing. The following two icings were prepared and tested.

| Control Icing | | Sugar-Free Icing of the Present Invention | |
|---|---|---|---|
| Powdered Sugar | 68.4 | Ezythritol | 42.0 |
| NFDM | 4.0 | NFDM | 4.0 |
| Salt (flour) | 0.6 | Salt (flour) | 0.6 |
| Emulsified Shortening | 19.0 | Corn Starch | 5.0 |
| Water | 7.8 | Potato Maltodextrin | 5.0 |
| Vanilla | 0.2 | Water | 10.0 |
| | | Maltitol Syrup | 12.8 |
| | | Emulsified Shortening | 20.0 |
| | | Polysorbate 60 | 0.2 |
| | | Vanilla | 0.2 |
| | | Aspartame | 0.2 |

The powdered sugar is sucrose, the erythritol was obtained for Cerestar under the trademark C 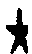 Eridex™ 16951. The aspartame was NutraSweet™ Custom Liquid 50. The corn starch was a conventional common corn starch. NFDM is non-fat dry milk. The corn starch, potato maltodextrin, and maltitol syrup are bulking agents used in accordance with the present invention.

To make the control icing, the sugar, salt and NFDM were sifted together and then creamed with the shortening. The vanilla and water were then added and mixed together at high speed to a specific gravity of 0.70 to 0.75.

To make the cream icing of the present invention, the erythritol, NFDM, salt, corn starch and potato maltodextrin were mixed together and then creamed with the shortening and the polysorbate. Water, vanilla, aspartame and maltitol syrup were then added and mixing was conducted at a high speed to a specific gravity of 0.70 to 0.75.

The cream icing composition of the present invention included low levels of maltitol syrup and aspartame to enhance sweetness, the use of stabilizers (and additional water) to increase opacity and texture, and the use of emulsifiers to lower the specific gravity.

Specific gravity, water activity, viscosity, and textural analysis was measured for both the control and the present invention. Viscosity measurements were expressed in centipoise (cps) where 1 centipoise = 0.01 Poise and 1 Poise = 1 g. s⁻¹. cm⁻¹. Results were as follows:

| | Control | Present Invention |
|---|---|---|
| Specific gravity | 0.74 | 0.72 |
| Water activity | 0.767 @ 27.3C | 0.796 @ 29.2C |
| Helipath viscosity | 467,000 cps | 489,000 cps |
| Texture (Stevens QTS 25) | | |
| Hardness | 290.0 g | 306.0 g |
| Cohesiveness | 0.766 | 0.705 |
| Gumminess | 222.03 g | 215.58 g |
| Chewiness | 4283.0 gmm | 4053.0 gmm |
| Adhesiveness | 5070.0 gs | 5375.60 gs |

All tested attributes are comparable for the present invention and control products.

These tests were conducted in a conventional manner using conventional equipment.

Shelf life was determined by testing viscosity and texture over three days.

| | Control | | | Present invention | | |
|---|---|---|---|---|---|---|
| | **Day 1** | **Day 2** | **Day 3** | **Day 1** | **Day 2** | **Day 3** |
| Helipath Viscosity (cps) | 467,000 | 627,100 | 618,000 | 489,000 | 648,000 | 664,900 |
| Texture Analysis | | | | | | |
| (Stevens QTS25) | | | | | | |
| Hardness (g) | 290.0 | 375.0 | 370.0 | 306.0 | 323.0 | 374.0 |
| Cohesiveness | 0.766 | 0.683 | 0.691 | 0.705 | 0.808 | 0.675 |
| Gumminess (g) | 222.0 | 255.0 | 255.8 | 215.6 | 260.9 | 252.6 |
| Chewiness (gmm) | 4283.0 | 4893.6 | 4917.3 | 4053.0 | 4904.6 | 4920.0 |
| Adhesiveness (gs) | 5070.0 | 6949.8 | 6829.6 | 5377.6 | 5593.0 | 62.97.6 |

No significant differences were noted between these products over the three day shelf life.

Sensory testing was also conducted to compare attributes and determine overall acceptability.

| Attribute | Control | Present invention |
|---|---|---|
| Appearance (Creamy/Pasty) | 7.1 | 7.0 |
| | | |
| Mouthfeel (Smooth/Gritty) | 6.9 | 6.8 |
| | | |
| Sweetness (Low-Intense) | 9.1 | 8.0 |
| Vanilla (Low-Intense) | 7.5 | 8.7 |
| Cooling Effect (Non/Intense) | 0.4 | 9.2 |
| Overall (Like/Dislike) | 4.8 | 5.7 |

Panelist rated the various attributes on a 0 to 15 close ended scale. The only statistically different rating was in the cooling effect. Surprisingly, this did not influence the overall rating.

Caloric content was calculated for a 33.3 gm serving size (approx. 2 TBS.). The calories for the control are 149 Kcal and 74.8 Kcal for the present invention. A 50% reduction was achieved using the icing composition of the present invention.

## Claims

1. A sugar-free cream icing comprising:
50 to 75% of a sugar-free component;
at least 10% of a shortening; and
5 to 20% water,
wherein said sugar-free component comprises erythritol, a bulking agent, an emulsifier, and a high intensity sweetener.

2. The sugar-free cream icing of claim 1 wherein said bulking agent is at least one substance selected from the group consisting of a polyol, starch, starch hydrolysate, hydrogenated starch hydrolysate, and polydextrose.

3. The sugar-free cream icing of claim 1 wherein the emulsifier is selected from the group consisting of lecithin and polysorbate.

4. The sugar-free cream icing of claim 1 wherein the high intensity sweetener is selected from the group consisting of saccharine, aspartame, and acesulfame-k.

5. The sugar-free cream icing of claim 1 wherein the sugar-free component comprises 65% erythritol, 35% bulking agent, 0.3% emulsifier, and 0.3% high intensity sweetener.

6. The sugar-free cream icing of claim 2 wherein the polyol is selected from the group consisting of isomalt, lactitol, maltitol, mannitol, sorbitol, and xylitol; and the starch hydrolysate is a maltodextrin.

## Patentansprüche

1. Zuckerfreie Cremeüberzugsmasse umfassend
50 bis 75 % einer zuckerfreien Komponente;
mindestens 10 % eines Backfetts; und
5 bis 20 % Wasser,
wobei die zuckerfreie Komponente Erythrit, einen Füllstoff, einen Emulgator und einen Süßstoff mit hoher Intensität aufweist.

2. Zuckerfreie Cremeüberzugsmasse nach Anspruch 1, wobei der Füllstoff mindestens eine Substanz ist, die aus der Gruppe bestehend aus einem Polyol, Stärke, Stärkehydrolysat, hydriertem Stärkehydrolysat und Polydextrose ausgewählt ist.

3. Zuckerfreie Cremeüberzugsmasse nach Anspruch 1, wobei der Emulgator aus der Gruppe bestehend aus Lecithin und Polysorbat ausgewählt ist.

4. Zuckerfreie Cremeüberzugsmasse nach Anspruch 1, wobei der Süßstoff mit hoher Intensität aus der Gruppe bestehend aus Saccharin, Aspartam und Acesulfam-K ausgewählt ist.

5. Zuckerfreie Cremeüberzugsmasse nach Anspruch 1, wobei die zuckerfreie Komponente 65 % Erythrit, 35 % Füllstoff, 0,3 % Emulgator und 0,3 % Süßstoff mit hoher Intensität aufweist.

6. Zuckerfreie Cremeüberzugsmasse nach Anspruch 2, wobei das Polyol aus der Gruppe bestehend aus Isomalt, Lactit, Maltit, Mannit, Sorbit und Xylit ausgewählt ist, und das Stärkehydrolysat ein Maltodextrin ist.

## Revendications

1. Glaçage à la crème sans sucre comprenant :
50 à 75 % d'un composant sans sucre ;
au moins 10 % d'une matière grasse ; et
5 à 20 % d'eau,
dans lequel ledit composant sans sucre comprend l'érythritol, un agent de charge, un émulsifiant et un édulcorant intense.

2. Glaçage à la crème sans sucre selon la revendication 1, dans lequel ledit agent de charge est au moins une substance choisie dans le groupe constitué par un polyol, un amidon, un hydrolysat d'amidon, un hydrolysat d'amidon hydrogéné et un polydextrose.

3. Glaçage à la crème sans sucre selon la revendication 1, dans lequel l'émulsifiant est choisi dans le groupe constitué par la lécithine et le polysorbate.

4. Glaçage à la crème sans sucre selon la revendication 1, dans lequel l'édulcorant intense est choisi dans le groupe constitué par la saccharine, l'aspartame et l'acésulfame-k.

5. Glaçage à la crème sans sucre selon la revendication 1, dans lequel le composant sans sucre comprend 65 % d'érythritol, 35 % d'agent de charge, 0,3 % d'émulsifiant et 0,3 % d'édulcorant intense.

6. Glaçage à la crème sans sucre selon la revendication 2, dans lequel le polyol est choisi dans le groupe constitué par l'isomalt, le lactitol, le maltitol, le mannitol, le sorbitol et le xylitol ; et l'hydrolysat d'amidon est une maltodextrine.
